# EUROPEAN PATENT APPLICATION

(11) **EP 4 756 386 A1**
(43) Date of publication of application: **10.06.2026**
(21) Application number: 25220300.5
(22) Date of filing: 03.12.2025
(51) Int. Cl.: G01F 1/66, G01F 1/667

(54) **A MEASURING STRUCTURE OF A FLOW MEASUREMENT SENSOR AND ITS ASSEMBLING METHOD**

(30) Priority: 04.12.2024 CN 202411769859
(71) Applicant: Huizhong Instrumentation Co., Ltd, Tangshan Hebei (CN)
(72) Inventor: Zhu, Xiangna, Tangshan (CN); Li, Shuang, Tangshan (CN); Yan, Xuezhi, Tangshan (CN); Feng, Xiankui, Tangshan (CN); Zhang, Lixin, Tangshan (CN)
(74) Representative: Michalski Hüttermann & Partner mbB

(57) **Abstract**

The invention relates to a measuring structure of a flow measurement sensor and an assembling method thereof, belonging to the fields of acoustics and sensing technology. The measuring structure comprises a flow measurement central sleeve, wherein both the front and rear parts of the flow measurement central sleeve are of a clamp-shaped opening structure; an upstream ultrasonic reflection sheet and a downstream ultrasonic reflection sheet are respectively installed in the clamp-shaped opening structures of the front and rear parts of the flow measurement central sleeve through mounting slideways. The structure can reduce pressure loss and fluid disturbance, and improve the accuracy of flow measurement.

## Description

### Technical Field

The present invention relates to a flow measurement sensor structure and method for measuring flowing media, particularly an ultrasonic measurement structure for liquids or gases, and belongs to the field of acoustics and sensing technology.

### Background Art

At present, the structures of existing ultrasonic flow sensors, in particular small-caliber ones, typically employ a bluff body and a reflector to measure flow by reflecting ultrasonic waves, Common structures include: ① Chinese Patent No. CN201920093376.X entitled "An Ultrasonic Water Metering Module Structure and Ultrasonic Water Meter", where the bluff body is fixed to the pipe section by means of a hook snap-fit connection, the reflector is installed in the reflection groove of the bluff body, and a W-shaped reflection form is formed as a whole. However, since the reflector in this form is not directly fixed, it is prone to inaccurate measurement due to tolerance issues.② Chinese Patent No. CN202010661469.5 entitled "An Ultrasonic Measurement Structure and Its Assembly Method", in which a flow measurement central sleeve is arranged inside the pipe section, the flow measurement central sleeve is composed of three integral parts: the middle part is a flow measurement channel with a smaller inner diameter, and the front and rear parts are lumens with a larger inner diameter, The upstream ultrasonic reflector and the downstream ultrasonic reflector are respectively installed in the lumens of the front and rear parts of the flow measurement central sleeve, forming a U-shaped reflection form as a whole. Since the front and rear lumens of the flow measurement central sleeve occupy most of the internal space of the pipe section, they cause obstruction and disturbance to normal flow measurement, thus affecting the flow measurement accuracy. In addition, the flow measurement central sleeve and the reflector are unstable in positioning inside the pipe section, and are prone to shaking after assembly, which affects the flow measurement accuracy.

### Summary of the Invention

The objective of the present invention is to provide a measurement structure and method for a flow measurement sensor, so as to solve at least one of the problems existing in the aforementioned prior art.

The embodiment of the first aspect of the present invention provides a measurement structure for a flow measurement sensor, comprising an upstream ultrasonic reflection sheet, a flow measurement central sleeve, and a downstream ultrasonic reflection sheet, both the front and rear parts of the flow measurement central sleeve adopt a clamp-shaped opening structure, which is composed of an arc-shaped left clamp body and an arc-shaped right clamp body, with a clamp-shaped opening formed between the arc-shaped left clamp body and the arc-shaped right clamp body, mounting slideways are horizontally arranged disposed on the inner walls of the arc-shaped left clamp body and the arc-shaped right clamp body respectively, via which the upstream ultrasonic reflection sheet and the downstream ultrasonic reflection sheet are respectively mounted in the clamp-shaped opening structures at the front and rear of the flow measurement central sleeve.

The embodiment of the second aspect of the present invention provides an assembly method for the measurement structure of a flow measurement sensor, characterized in that both of the front and rear portions of the flow measurement central sleeve have a clamp-shaped open structure, and the upstream ultrasonic reflection sheet and downstream ultrasonic reflection sheet are respectively installed within the clamp-shaped open structures at the front and rear of the flow measurement central sleeve by via the upstream mounting slideway and downstream mounting slideway respectively; upon the upstream ultrasonic reflection sheet being mounted in position along the upstream mounting slideway, the upstream reflection sheet fixing wings of the upstream ultrasonic reflection sheet is engaged in the upstream reflection sheet fixing holes on the upstream mounting slideway, and upon the downstream ultrasonic reflection sheet being mounted in position along the downstream mounting slideway, the downstream reflection sheet fixing wings of the downstream ultrasonic reflection sheet engage in the downstream reflection sheet fixing holes on the downstream mounting slideway; after the upstream ultrasonic reflection sheet, the flow measurement central sleeve and the downstream ultrasonic reflection sheet are assembled into a single assembly, the assembly is inserted into a pipe section body, the reflection sheet interference fixing points on the outer end of the upstream ultrasonic reflection sheet are in interference contact with the inner wall of the pipe section body, and the mid-section of the flow measurement central sleeve is positioned and sealed relative to the pipe section body by two O-ring seals.

The measuring structure of the flow measurement sensor proposed in the embodiments of the present invention reduces the internal space of the pipe section body occupied by the front and rear pipe bodies of the flow measurement central sleeve, decreases pressure loss and fluid disturbance, prevents the flow measurement central sleeve and reflectors from wobbling in the pipe section body, and improves flow measurement accuracy by configuring the front and rear parts of the flow measurement central sleeve as clamp-shaped opening structures.

The measurement structure of the flow measurement sensor proposed in the embodiments of the present invention features clamp-shaped opening structures on the front and rear parts of the flow measurement central sleeve. This design reduces the space occupied by the lumens of the sleeve's front and rear parts inside the pipe section body, lowers pressure loss and fluid disturbance, prevents the central sleeve and reflectors from wobbling within the pipe section, and ultimately enhances the flow measurement accuracy.

### Description of the Drawings

Figure 1 shows an exploded schematic view of the measurement structure of a flow measurement sensor according to an embodiment of the present invention;
Figure 2 shows a cross-sectional schematic view of the measurement structure of a flow measurement sensor according to an embodiment of the present invention;
Figure 3 shows another exploded schematic view of the measurement structure of a flow measurement sensor according to an embodiment of the present invention;
Figure 4 is a perspective view of a flow measurement sensor measurement structure according to an embodiment of the present invention;
Figure 5 is a side elevational schematic view of a flow measurement sensor measurement structure according to an embodiment of the present invention;
Figure 6 shows a comparative diagram of flow velocity nephograms of the measurement structure of the flow measurement sensor with a conventional notch and a clamp-shaped opening.

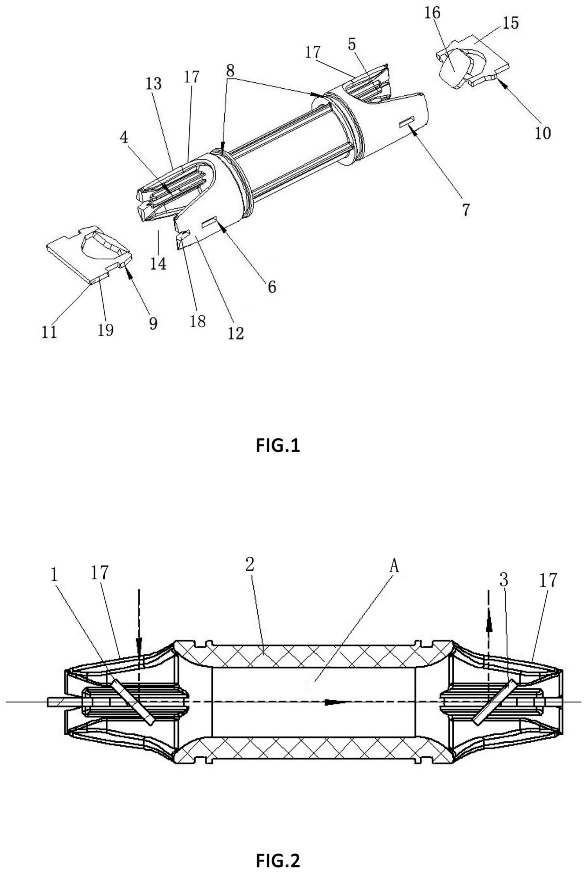

Explanation of reference signs in Figures 1 to 5:
1-upstream ultrasonic reflection sheet; 2-flow measurement central sleeve; 3-downstream ultrasonic reflection sheet; 4-upstream mounting slideways; 5-downstream mounting slideways; 6-upstream reflection sheet fixing hole; 7-downstream reflection sheet fixing hole; 8-O-ring installation groove; 9-upstream reflection sheet fixing wings; 10-downstream reflection sheet fixing wings; 11-reflection sheet interference fixing point; 12-arc-shaped left clamp body; 13-arc-shaped right clamp body; 14-clamp-shaped opening; 15-frame; 16-reflection mirror; 17-measurement port; 18-notches; 19-protrusions.

### Modes for carrying out the Invention

The present invention will be further described below with reference to the accompanying drawings and through embodiments.

A measuring structure of a flow measurement sensor, as shown in Figures 1 and 2, comprising an upstream ultrasonic reflection sheet (1), a flow measurement central sleeve (2), and a downstream ultrasonic reflection sheet (3), both the front and rear parts of the flow measurement central sleeve (2) adopt a clamp-shaped opening structure, which is composed of an arc-shaped left clamp body (12) and an arc-shaped right clamp body (13), with a clamp-shaped opening (14) formed between the arc-shaped left clamp body (12) and the arc-shaped right clamp body (13), mounting slideways are horizontally arranged disposed on the inner walls of the arc-shaped left clamp body (12) and the arc-shaped right clamp body (13) respectively, via which the upstream ultrasonic reflection sheet (1) and the downstream ultrasonic reflection sheet (3) are respectively mounted in the clamp-shaped opening structures at the front and rear of the flow measurement central sleeve (2).

The measuring structure of the flow measurement sensor proposed in the embodiments of the present invention, by configuring the front and rear parts of the flow measurement central sleeve 2 as clamp-shaped opening structures, can reduce the internal space of the pipe section body (not shown in the figure) occupied by the front and rear pipe bodies of the flow measurement central sleeve 2, decrease pressure loss and fluid disturbance, prevent the flow measurement central sleeve 2 and reflectors from wobbling inside the pipe section body, and improve flow measurement accuracy.

Further, in some embodiments, as shown in Figure 2, the clamp-shaped opening (14) penetrates through the two radially opposite sides of the flow measurement central sleeve (2), the portion of the clamp-shaped opening (14) opening on one radial side of the flow measurement central sleeve (2) is defined as a measurement port (17), the measurement port (17) is configured to allow the passage of ultrasonic waves or the insertion of an ultrasonic transducer, and the reflecting surfaces of the upstream ultrasonic reflection sheet (1) and the downstream ultrasonic reflection sheet (3) are respectively inclined towards the two measurement ports (17) at the front and rear sections of the flow measurement central sleeve (2).

In these embodiments, the opening of the clamp-shaped opening (14) on one radial side of the flow measurement central sleeve (2) is defined as a measurement port (17), which is configured to allow the passage of ultrasonic waves or the insertion of an ultrasonic transducer. The clamp-shaped opening (14) not only functions to reduce pressure loss and fluid disturbance, but its measurement port (17) can also serve as a mounting hole for the ultrasonic transducer, or be arranged opposite to the ultrasonic transducer to allow the passage of ultrasonic waves. The clamp-shaped opening structure simultaneously has the functions of flow rectification and facilitating the transmission and reception of ultrasonic waves by the ultrasonic transducer. Compared with the prior art, where the front and rear sides of the flow measurement central sleeve are provided with flow rectification structures and additional mounting holes for ultrasonic waves to pass through are opened on the flow measurement central sleeve, the clamp-shaped opening structure can simplify the processing procedures and ensure the structural strength of the flow measurement central sleeve (2).

Specifically, the measurement port (17) can serve as a mounting hole for the ultrasonic transducer. Certainly, an opening is provided on the pipe section body at the position corresponding to the measurement port (17). When the flow measurement central sleeve (2) is inserted into the pipe section body, the measurement port (17) and the opening can be arranged opposite to each other, allowing the ultrasonic generator to be installed in the opening and the probe of the ultrasonic generator to extend into the measurement port (17).This facilitates the measuring structure of the flow measurement sensor to transmit ultrasonic waves in the direction indicated by the arrow in Figure (2); certainly, the ultrasonic waves can also be transmitted in the direction opposite to that indicated by the arrow in Figure 2. Moreover, by having the probe of the ultrasonic generator extend into the measurement port (17), the ultrasonic generator can further restrict the movement of the flow measurement central sleeve (2) within the pipe section body, thereby ensuring the flow measurement accuracy.

In addition, the measurement port (17) can also be configured to only allow the passage of ultrasonic waves. In this case, the probe of the ultrasonic generator does not extend into the measurement port (17); instead, it is located on the outer side of the flow measurement central sleeve (2) and arranged opposite to the measurement port (17), thus facilitating the transmission of ultrasonic waves.

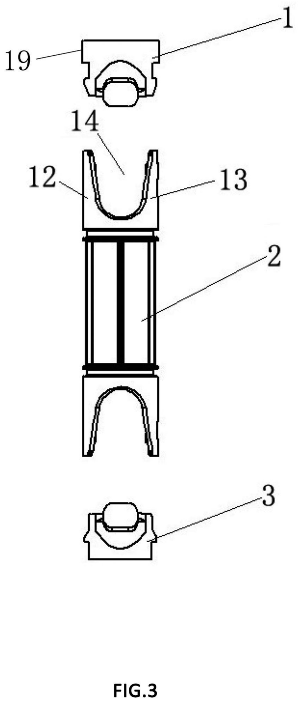

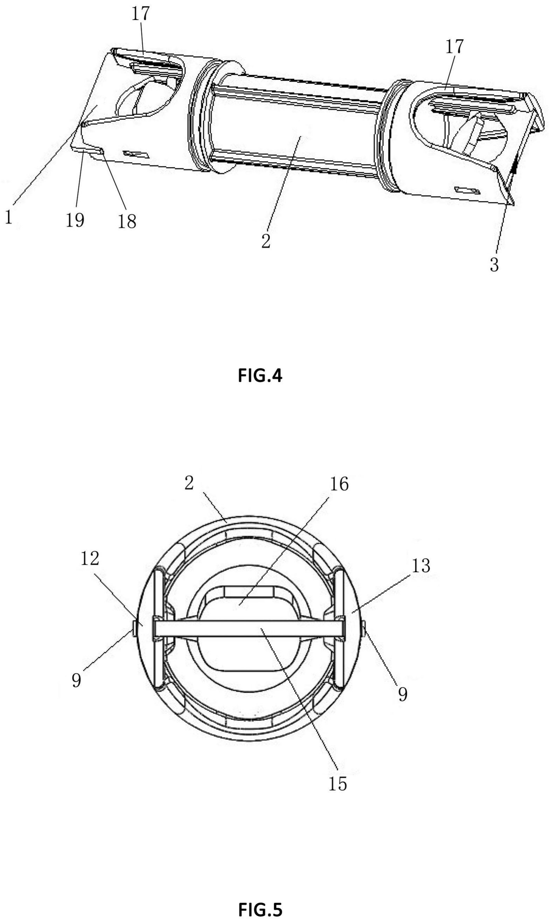

Further, in some embodiments, as shown in Figure 3 and 4, the end of the measurement port (17) close to the central portion of the flow measurement central sleeve (2) is arc-shaped. In this way, it is convenient for the probe to extend into the measurement port (17); of course, if the probe does not extend into the measurement port (17), it is also convenient for the probe to transmit ultrasonic waves through the measurement port (17).

Additionally, the width of the measurement port (17) may be set to increase gradually from its end adjacent to the middle part of the flow measurement central sleeve (2) to its end distant from the middle part of the flow measurement central sleeve (2). On the one hand, this can further minimize the occupation of the internal space of the pipe section body by the front and rear pipe bodies of the flow measurement central sleeve (2), thereby reducing pressure loss and fluid disturbance; on the other hand, it simplifies the machining process.

Additionally, a clamp-type opening structure may be formed by cutting off the front and rear sections of the flow measurement central sleeve (2). This enables the outer surfaces of the arc-shaped left clamp body (12) and the arc-shaped right clamp body (13) to retain the curved surfaces of the uncut sections of the front and rear parts of the flow measurement central sleeve (2). As illustrated in FIGS. 1 and 4, the clamp-type opening structure features a smooth surface, which can effectively minimize pressure loss and exerts a slight influence on the flow regime of the fluid.

For instance, during the fabrication of the clamp-type opening structure, a circular aperture matching the dimensions of the ultrasonic generator's probe may first be formed, followed by cutting the front and rear portions of the flow measurement central sleeve (2) along the tangents of the circular aperture, thus creating the clamp-type opening structure. This simplifies the fabrication process.

Further, in some embodiments, both the upstream ultrasonic reflection sheet (1) and the downstream ultrasonic reflection sheet (3) are integrally stamped structures, each comprising a frame (15) and a reflection mirror (16); after the frame (15) and the reflection mirror (16) are stamped, the reflection mirror (16), which is parallel to the frame (15) initially, is bent to a set inclination angle.

Further, in some embodiments, the flow measurement central sleeve (2) is formed by integrally injection molding, and the upstream ultrasonic reflection sheet (1) and the downstream ultrasonic reflection sheet (3) are assembled with the flow measurement central sleeve (2) into one piece.

Further, in some embodiments, as shown in Figure 1, upstream mounting slideways (4) and downstream mounting slideways (5) are respectively disposed on the clamp-shaped opening structures at the front and rear parts of the flow measurement central sleeve (2), and the upstream ultrasonic reflection sheet (1) and the downstream ultrasonic reflection sheet (3) are respectively mounted in the front and rear clamp-shaped opening structures of the flow measurement central sleeve (2) via the upstream mounting slideways (4) and the downstream mounting slideways (5).

By way of example, as shown in Figures 1 and 5, the upstream mounting slideways (4) may be provided on both the arc-shaped left clamp body (12) and the arc-shaped right clamp body (13) at the front part of the flow measurement central sleeve (2), and downstream mounting slideways (5) may be provided on both the arc-shaped left clamp body (12) and the arc-shaped right clamp body (13) at the rear part of the flow measurement central sleeve (2); an upstream reflection sheet fixing hole (6) is provided on the upstream mounting slideway (4), and a downstream reflection sheet fixing hole (7) is provided on the downstream mounting slideway (5); an upstream reflection sheet fixing wings (9) and a downstream reflection sheet fixing wings (10) are respectively provided on the frames of the upstream ultrasonic reflection sheet (1) and the downstream ultrasonic reflection sheet (3), and when the upstream ultrasonic reflection sheet (1) and the downstream ultrasonic reflection sheet (3) are mounted in place along the upstream mounting slideway (4) and the downstream mounting slideway (5) respectively, the upstream reflection sheet fixing wings (9) and the downstream reflection sheet fixing wings (10) are engaged in the upstream reflection sheet fixing hole (6) and the downstream reflection sheet fixing hole (7) respectively.

Further, as shown in Figures 1 and 3, notches (18) may also be provided at the free ends of both the arc-shaped left clamp body (12) and the arc-shaped right clamp body (13) at the front part of the flow measurement central sleeve (2), and the notches (18) and the upstream reflection sheet fixing holes (6) are disposed oppositely in the axial direction of the flow measurement central sleeve (2). The upstream ultrasonic reflection sheet (1) is provided with protrusions (19) at both ends in the width direction, and when the upstream reflection sheet fixing wings (9) are engaged in the upstream reflection sheet fixing holes (6), the protrusions (19) are inserted into the notches (18). The protrusions (19) can cooperate with the upstream reflection sheet fixing wings (9) to restrict the axial movement of the upstream ultrasonic reflection sheet (1) along the flow measurement central sleeve (2), thereby improving the installation stability of the upstream ultrasonic reflection sheet (1) and facilitating the accurate reflection of ultrasonic waves.

Further, in some embodiments, as shown in Figure 1, the outer end portion of the upstream ultrasonic reflection sheet (1) is provided with a reflection sheet interference fixing point (11). After the upstream ultrasonic reflection sheet (1), the flow measurement central sleeve (2) and the downstream ultrasonic reflection sheet (3) are assembled into an integrated unit, the assembly is need to be fitted into a pipe section body, and the reflection sheet interference fixing point (11) is used for interference contact with the inner wall of the pipe section body for positioning.

Further, in some embodiments, as shown in Figure 1, two O-ring installation grooves (8) (one at the front and one at the rear) are provided in the middle part of the flow measurement central sleeve (2), and O-ring seals are disposed in the O-ring installation groove (8); the middle part of the flow measurement central sleeve (2) is positioned and sealed with the pipe section body via the O-ring seals.

Further, in some embodiments, as shown in Figure 2, the flow measurement passage in the middle part of the flow measurement central sleeve (2) has a circular cross-section, with a diameter-reduced structure (A) disposed in inside of the flow measurement passage.

Further, in some embodiments, the measurement structure of the flow measurement sensor is a U-shaped measurement structure.

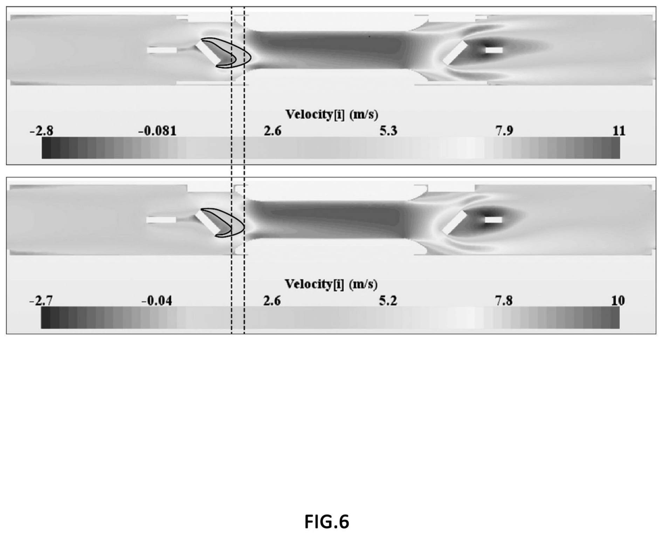

In the following, the technical effects of the measurement structure of the flow measurement sensor proposed in the embodiment of the present invention in reducing pressure loss and fluid disturbance will be described in detail with reference to Figure 6. The upper part of Figure 6 shows the flow velocity nephogram within the measurement structure of a flow measurement sensor with conventional notches. Specifically, the front and rear portions of the flow measurement central sleeve (2) are provided with conventional notches, by way of example, a rectangular notch. The lower part of Figure 6 shows the flow velocity nephogram of the measurement structure of the flow measurement sensor according to one embodiment of the present invention. The double dashed lines in Figure 6 are merely auxiliary lines to facilitate the comparison of differences in the backflow vortex regions, and do not represent physical structures. In addition, the water flow direction in Figure 6 is from the left side of the figure (the front end of the flow measurement central sleeve (2)) to the right side (the rear end of the flow measurement central sleeve (2)).

By way of example, for a flow measurement central sleeve with a nominal pipe diameter of 15 mm, the pressure losses generated by the conventional notch and clamp-shaped opening structures under the same operating conditions at a typical flow rate (2.5 m³/h) are shown in Table 1. Since the pipe body portion of the conventional notch occupies the internal space of the pipe section body, which is equivalent to reducing the inner diameter of the pipe section body at the lumen portion, the pressure loss generated at the typical flow rate is 41.40 kPa. In contrast, the clamp-shaped opening of the present invention eliminates the upstream and downstream pipe body portions, resulting in a pressure loss of 35.87 kPa; this achieves a significant reduction in pressure loss and thus exerts a beneficial effect on reducing water supply energy consumption.

Table 1 presents a comparison of pressure losses generated by the conventional notch and the clamp-shaped opening:

| Opening Type | Pressure Loss (KPa) |
|---|---|
| Conventional notch | 41.40 |
| Clamp-Shaped Opening | 35.87 |

In addition, a comparative diagram of the flow velocity nephograms of the longitudinal sections of the pipe sections with the conventional notch and the clamp-shaped opening is shown in Figure 6. Since the upstream and downstream pipe body portions of the conventional notch squeeze the internal space of the pipe section body, the flow velocity increases when the upstream water flow passes through this location; subsequently, when the water flow passes through the upstream ultrasonic reflection sheet, a backflow vortex region is formed on the back side of the upstream ultrasonic reflection sheet, and this backflow vortex region is detrimental to the ultrasonic transmission signals and the stability of the flow pattern in the measurement section. The clamp-shaped opening proposed in the present invention eliminates the upstream and downstream pipe body portions, allowing the water flow to pass through the upstream ultrasonic reflection sheet at a relatively slow speed, such that the area of the backflow region and the vortex intensity on the back side of the upstream ultrasonic reflection sheet are smaller than those of the conventional notch. Therefore, the clamp-shaped opening of the present invention helps to stabilize the water flow pattern and improve the measurement accuracy of the ultrasonic flow measurement instrument.

Embodiments of the second aspect of the present invention provide a method for assembling a measuring structure of a flow measurement sensor, wherein both of the front and rear portions of the flow measurement central sleeve (2) have a clamp-shaped open structure, and the upstream ultrasonic reflection sheet (1) and downstream ultrasonic reflection sheet (3) are respectively installed within the clamp-shaped open structures at the front and rear of the flow measurement central sleeve (2) via the upstream mounting slideway (4) and downstream mounting slideway (5) respectively. Upon the upstream ultrasonic reflection sheet (1) being mounted in position along the upstream mounting slideway (4), the upstream reflection sheet fixing wings (9) of the upstream ultrasonic reflection sheet (1) is engaged in the upstream reflection sheet fixing holes (6) on the upstream mounting slideway (4), and upon the downstream ultrasonic reflection sheet (3) being mounted in position along the downstream mounting slideway (5), the downstream reflection sheet fixing wings (10) of the downstream ultrasonic reflection sheet (3) engage in the downstream reflection sheet fixing holes (7) on the downstream mounting slideway (5). After the upstream ultrasonic reflection sheet (1), the flow measurement central sleeve (2) and the downstream ultrasonic reflection sheet (3) are assembled into a single assembly, the assembly is inserted into a pipe section body, the reflection sheet interference fixing points (11) on the outer end of the upstream ultrasonic reflection sheet (1) are in interference contact with the inner wall of the pipe section body, and the mid-section of the flow measurement central sleeve (2) is positioned and sealed relative to the pipe section body by two O-ring seals.

The present invention changes the front and rear parts of the flow measurement central sleeve (2) to a clamp-shaped opening structure, which reduces the internal space of the pipe section body occupied by the pipe bodies in the front and rear parts of the flow measurement central sleeve, thereby decreasing pressure loss and fluid disturbance. Through the cooperation of the upstream reflection sheet fixing wings (9) and the downstream reflection sheet fixing wings (10) with the upstream reflection sheet fixing holes (6) and the downstream reflection sheet fixing holes (7) respectively, the stability and accuracy of the reflection sheets are improved, and the assembly difficulty is reduced. The two O-ring mounting grooves (8) provided in the middle portion of the flow measurement central sleeve (2) enhance the sealing performance, which greatly improves the measurement accuracy.

Although the embodiments of the present invention have been described in detail above, those skilled in the art can make various modifications and variations to the embodiments of the present invention without departing from the spirit and scope of the present invention. It should be understood that, in the view of those skilled in the art, these modifications and variations will still fall within the spirit and scope of the embodiments of the present invention as defined by the claims.

## Claims

1. A measuring structure of a flow measurement sensor, comprising an upstream ultrasonic reflection sheet (1), a flow measurement central sleeve (2), and a downstream ultrasonic reflection sheet (3), both the front and rear parts of the flow measurement central sleeve (2) adopt a clamp-shaped opening structure, which is composed of an arc-shaped left clamp body (12) and an arc-shaped right clamp body (13), with a clamp-shaped opening (14) formed between the arc-shaped left clamp body (12) and the arc-shaped right clamp body (13) , mounting slideways are horizontally arranged disposed on the inner walls of the arc-shaped left clamp body (12) and the arc-shaped right clamp body (13) respectively, via which the upstream ultrasonic reflection sheet (1) and the downstream ultrasonic reflection sheet (3) are respectively mounted in the clamp-shaped opening structures at the front and rear of the flow measurement central sleeve (2).

2. The measuring structure of a flow measurement sensor according to claim 1, wherein the clamp-shaped opening (14) penetrates through the two radially opposite sides of the flow measurement central sleeve (2), the portion of the clamp-shaped opening (14) opening on one radial side of the flow measurement central sleeve (2) is defined as a measurement port (17), the measurement port (17) is configured to allow the passage of ultrasonic waves or the insertion of an ultrasonic transducer, and the reflecting surfaces of the upstream ultrasonic reflection sheet (1) and the downstream ultrasonic reflection sheet (3) are respectively inclined towards the two measurement ports (17) at the front and rear sections of the flow measurement central sleeve (2).

3. The measuring structure of a flow measurement sensor according to claim 2, wherein the end of the measurement port (17) close to the central portion of the flow measurement central sleeve (2) is arc-shaped, adapted to match the ultrasonic transducer probe's outer contour, and the measurement port (17) has a width that gradually increases from its end close to the central portion of the flow measurement central sleeve (2) to the end far away therefrom.

4. The measuring structure of a flow measurement sensor according to claim 1, wherein both the upstream ultrasonic reflection sheet (1) and the downstream ultrasonic reflection sheet (3) are integrally stamped structures, each comprising a frame (15) and a reflection mirror (16); after the frame (15) and the reflection mirror (16) are stamped, the reflection mirror (16), which is parallel to the frame (15) initially, is bent to a set inclination angle.

5. The measuring structure for a flow measurement sensor as claimed in any one of claims 1 to 4, **characterized in that** the flow measurement central sleeve (2) is formed by integrally injection molding, and the upstream ultrasonic reflection sheet (1) and the downstream ultrasonic reflection sheet (3) are assembled with the flow measurement central sleeve (2) into one piece.

6. The measuring structure of a flow measurement sensor according to claim 5, **characterized in that** upstream mounting slideways (4) are provided on both the arc-shaped left clamp body (12) and the arc-shaped right clamp body (13) at the front part of the flow measurement central sleeve (2), and downstream mounting slideways (5) are provided on both the arc-shaped left clamp body (12) and the arc-shaped right clamp body (13) at the rear part of the flow measurement central sleeve (2); an upstream reflection sheet fixing hole (6) is provided on the upstream mounting slideway (4), and a downstream reflection sheet fixing hole (7) is provided on the downstream mounting slideway (5);
an upstream reflection sheet fixing wings (9) and a downstream reflection sheet fixing wings (10) are respectively provided on the upstream ultrasonic reflection sheet (1) and the downstream ultrasonic reflection sheet (3), and when the upstream ultrasonic reflection sheet (1) and the downstream ultrasonic reflection sheet (3) are mounted in place along the upstream mounting slideway (4) and the downstream mounting slideway (5) respectively, the upstream reflection sheet fixing wings (9) and the downstream reflection sheet fixing wings (10) are engaged in the upstream reflection sheet fixing hole (6) and the downstream reflection sheet fixing hole (7) respectively.

7. The measuring structure of a flow measurement sensor according to claim 6, **characterized in that** notches (18) are provided at the free ends of both the arc-shaped left clamp body (12) and the arc-shaped right clamp body (13) at the front part of the flow measurement central sleeve (2), and the notches (18) are disposed opposite to the upstream reflection sheet fixing holes (6) in the axial direction of the flow measurement central sleeve (2); the upstream ultrasonic reflection sheet (1) is provided with protrusions (19) at both ends in the width direction, and when the upstream reflection sheet fixing wings (9) are engaged in the upstream reflection sheet fixing holes (6), the protrusions (19) are inserted into the notches (18).

8. The measuring structure of a flow measurement sensor according to claim 5, **characterized in that** the outer end portion of the upstream ultrasonic reflection sheet (1) is provided with a reflection sheet interference fixing point (11); after to the upstream ultrasonic reflection sheet (1), the flow measurement central sleeve (2) and the downstream ultrasonic reflection sheet (3) are integrated into a single assembly, the assembly need to be fitted into a pipe section body, and the reflection sheet interference fixing point (11) is configured to make interference contact with the inner wall of the pipe section body for positioning.

9. The measuring structure of a flow measurement sensor according to any one of claims 1 to 4, **characterized in that** the flow measurement passage in the middle part of the flow measurement central sleeve (2) has a circular cross-section, with a diameter-reduced structure disposed in inside of the flow measurement passage.

10. A method of assembling a measuring structure for a flow measurement sensor as claimed in any one of claims 1 to 9, **characterized in that** both of the front and rear portions of the flow measurement central sleeve (2) have a clamp-shaped open structure, and the upstream ultrasonic reflection sheet (1) and downstream ultrasonic reflection sheet (3) are respectively installed within the clamp-shaped open structures at the front and rear of the flow measurement central sleeve (2) via the upstream mounting slideway (4) and downstream mounting slideway (5) respectively;
upon the upstream ultrasonic reflection sheet (1) being mounted in position along the upstream mounting slideway (4), the upstream reflection sheet fixing wings (9) of the upstream ultrasonic reflection sheet (1) is engaged in the upstream reflection sheet fixing holes (6) on the upstream mounting slideway (4), and upon the downstream ultrasonic reflection sheet (3) being mounted in position along the downstream mounting slideway (5), the downstream reflection sheet fixing wings (10) of the downstream ultrasonic reflection sheet (3) engage in the downstream reflection sheet fixing holes (7) on the downstream mounting slideway (5);
after the upstream ultrasonic reflection sheet (1), the flow measurement central sleeve (2) and the downstream ultrasonic reflection sheet (3) are assembled into a single assembly, the assembly is inserted into a pipe section body, the reflection sheet interference fixing points (11) on the outer end of the upstream ultrasonic reflection sheet (1) are in interference contact with the inner wall of the pipe section body, and the mid-section of the flow measurement central sleeve (2) is positioned and sealed relative to the pipe section body by two O-ring seals.
